# EUROPÄISCHE PATENTSCHRIFT

(11) **EP 3 409 541 B1**
(45) Veröffentlichungstag und Bekanntmachung des Hinweises auf die Patenterteilung: **09.10.2019**
(21) Anmeldenummer: 18172677.9
(22) Anmeldetag: 16.05.2018
(51) Int. Cl.: B60R 11/04, G08G 1/16, H04N 13/243, H04N 13/282, B60R 1/00

(54) **VORRICHTUNG ZUR FAHRSCHLAUCHABSICHERUNG**
DEVICE FOR SECURING DRIVE PATH
DISPOSITIF DE PROTECTION DE COULOIR DE CIRCULATION

(30) Priorität: 02.06.2017 DE 102017209427
(43) Veröffentlichungstag der Anmeldung: 05.12.2018
(73) Patentinhaber: VOLKSWAGEN AKTIENGESELLSCHAFT, 38440 Wolfsburg (DE)
(72) Erfinder: Korzec, Maciej, 10247 Berlin (DE)

(56) Entgegenhaltungen:
- DE-A1-102011 116 169
- DE-B3-102011 080 702

## Beschreibung

Die Erfindung betrifft eine Vorrichtung zur Absicherung des Fahrschlauchs eines Kraftfahrzeugs gemäß dem Oberbegriff des Anspruchs 1.

In modernen automatisierten Fahrerassistenzsystemen wird zunehmend ein Detailverständnis des statischen und dynamischen Umfeldszenarios benötigt. Hierbei muss für eine automatische Niedriggeschwindigkeits-Assistenz, wie einen Parkassistenten, der gesamte Fahrschlauch abgesichert werden. Zusätzlich wird eine Hinderniserkennung an den Fahrzeugseiten benötigt, etwa für eine Parklückenvermessung. Ferner ist eine Bordsteindetektion für den Felgenschutz und das Anfahren an Bordsteinen erwünscht. Die aktuell entwickelten monokularen Systeme haben intrinsische Nachteile, die als Systemgrenzen nicht überwindbar sind, etwa Mindestfahrtweg, Bewegungsnotwendigkeit des Ego-Fahrzeugs, Genauigkeiten, Probleme bei Schatten/Spiegelungen, etc..

Erste Stereo-Weitwinkelsysteme einschließlich gegebenenfalls einer Objekterkennung durch Structure-From-Motion wurden bereits erfolgreich getestet und ein monokulares System zur Erfassung des Fahrschlauchs eines Fahrzeugs ist gerade in der Serienumsetzung. Frontkamerasysteme, die oft mit Stereokameras umgesetzt werden, haben typischerweise geringe Winkel und eignen sich nicht zur Fahrschlauchabsicherung im Nahbereich.

Die Druckschrift DE 10 2011 113 099 A1 betrifft ein Verfahren zur Bestimmung von Objekten in einer Umgebung eines Fahrzeugs. Bei dem Verfahren werden eine erste Umgebungsinformation, welche Positionsinformationen von statischen Objekten in der Umgebung aufweist, und eine zweite Umgebungsinformation, welche Positionsinformationen von statischen und dynamischen Objekten in der Umgebung aufweist, bestimmt. In Abhängigkeit von der ersten Umgebungsinformation und der zweiten Umgebungsinformation werden Positionsinformationen von dynamischen Objekten in der Umgebung ermittelt.

Die Druckschrift DE 10 2011 087 901 A1 betrifft Fahrerassistenzsysteme, die zur Ausgabe von Darstellungen einer Fahrzeugumgebung an einen Fahrer ausgebildet sind, sowie ein Verfahren in einem derartigen Fahrerassistenzsystem, das die folgenden Schritte umfasst:
- Erfassen von Umfelddaten mit Hilfe einer Umfeldsensorik, wobei die Umfeldsensorik sechs Kameras umfasst und zwar jeweils eine frontseitig und eine heckseitig und jeweils zwei auf den Seiten des Fahrzeugs;
- Bestimmen einer situationsabhängigen virtuellen Kameraperspektive;
- Erzeugen einer Umfelddarstellung, wobei die Umfelddaten aus Sicht einer virtuellen Kamera auf eine mindestens zweischichtige Ebene, beispielsweise eine Objektschicht und eine Hintergrundschicht, projiziert werden; und
- Ausgabe der Umfelddarstellung auf einer Anzeigevorrichtung der Mensch-Maschine-Schnittstelle.

Dabei wird die virtuelle Kameraperspektive als Funktion von Objekten im Fahrzeugumfeld und/oder als Funktion von Zustandsvariablen des Fahrzeugs bestimmt, wobei die virtuelle Kamera dann auf mindestens eins der erkannten Objekte, etwa auf Hindernisse im Fahrschlauch, ausgerichtet werden kann.

Die Druckschrift US 9,126,525 B2 zeigt eine Warnvorrichtung für den Fahrer eines Kraftfahrzeugs, wobei das Umfeld des Kraftfahrzeugs mit einer Umfeldsensorik erfasst wird. Dabei umfasst die Umfeldsensorik vier Kameras, wobei jeweils eine Kamera das vordere und hintere Umfeld und jeweils eine Kamera das linke und rechte seitliche Umfeld des Fahrzeugs abdecken.

Die Druckschrift US 7,688,229 B2 beschreibt ein System zur Darstellung des Umfelds eines Kraftfahrzeugs auf einem Fahrzeugdisplay. Dabei werden Videosequenzen des Umfelds eines Kraftfahrzeugs durch ein sphärisches Video-Kamerasystem bestehend aus sechs MP-Kameras erstellt. Dadurch ist das System in der Lage, Videos von mehr als 75 % der Vollkugel aufzunehmen.

Die Druckschrift DE 10 2013 200 427 A1 beschreibt ein Verfahren zum Erzeugen eines Rundumsichtbildes einer Fahrzeugumgebung eines Fahrzeugs, wobei das Rundumsichtbild im Hinblick auf Hindernisbereiche und frei befahrbare Flächen ausgewertet wird. Das Rundumsichtbild wird aus den Bildern von vier Fahrzeugkameras erzeugt, die Bilder des vorderen, hinteren und der beiden seitlichen Umfeldern des Fahrzeugs erzeugen.

Die Druckschrift DE 10 2015 000 794 A1 betrifft eine Rundumsicht-Anzeigevorrichtung zum Anzeigen einer Umgebung eines Kraftfahrzeugs unter Verwendung mehrerer an dem Fahrzeug an unterschiedlichen Positionen angeordneten Kameraeinrichtungen, nämlich je eine Kamera an der rechten und der linken Seite sowie je eine frontseitige und heckseitige Kamera, und einer Anzeigeeinrichtung. Dabei ist die Rundumsicht-Anzeigevorrichtung dazu eingerichtet, die Umgebung des Fahrzeugs in einer synthetisierten Vogelperspektive und in Darstellungen von den durch die Kameraeinrichtungen erfassten Umgebungsbereichen des Fahrzeugs auf der Anzeigeeinrichtung anzuzeigen.

Die DE 102011080702 offenbart eine Vorrichtung zur Überwachung des Fahrschlauchs gemäß dem Oberbegriff des Anspruchs 1.

Die bisherigen Systeme sind nicht in der Lage den Fahrschlauch eines Fahrzeugs optimal abzusichern, haben Mängel bei der Abdeckung der Bordsteinerkennung, haben monokamerabedingte Schwächen und/oder sind nicht echtzeitfähig.

Der Erfindung liegt daher die Aufgabe zugrunde, die Absicherung des Fahrschlauchs sowie des seitlichen Bereichs eines Fahrzeugs, insbesondere eines Kraftfahrzeugs, zu verbessern. Diese Aufgabe wird durch eine Vorrichtung mit den Merkmalen des Anspruchs 1 gelöst. Bevorzugte Ausführungsformen der Erfindung sind Gegenstand der Unteransprüche.

Die erfindungsgemäße Vorrichtung zur Überwachung des Fahrschlauchs eines Fahrzeugs umfasst mindestens sechs am Fahrzeug zur Umfeldüberwachung angeordnete Kameras und eine Berechnungseinrichtung, wobei die Kameras durch Weitwinkelkameras mit einem effektiven Sichtbereich von mindestens 165° gebildet werden, wobei
- zwei Kameras an der Frontseite des Fahrzeugs unter einem vorgegebenen Abstand so angeordnet sind, dass die Kameraachse der jeweiligen Kamera unter einem jeweiligen vorgegebenen Winkel gegenüber der Fahrzeuglängsachse nach außen geneigt ist,
- zwei Kameras an der Heckseite des Fahrzeugs unter einem vorgegebenen Abstand so angeordnet sind, dass die Kameraachse der jeweiligen Kamera unter einem jeweiligen vorgegebenen Winkel gegenüber der Fahrzeuglängsachse nach außen geneigt ist,
- je eine Kamera an jeder Seite des Fahrzeugs so angeordnet ist, dass die Kameraachse der jeweiligen Kamera parallel zur Fahrzeugquerachse angeordnet ist,
- die beiden frontseitigen Kameras einen frontseitigen Stereosichtbereich bilden,
- die beiden heckseitigen Kameras einen heckseitigen Stereosichtbereich bilden,
- die linke seitliche Kamera mit der frontseitigen linken Kamera einen linksseitigen vorderen Stereobereich sowie die rechte seitliche Kamera mit der frontseitigen rechten Kamera einen rechtsseitigen vorderen Stereobereich bilden,
- die linke seitliche Kamera mit der heckseitigen linken Kamera einen linksseitigen hinteren Stereobereich sowie die rechte seitliche Kamera mit der heckseitigen rechten Kamera einen rechtsseitigen hinteren Stereobereich bilden,
- die linke seitliche Kamera einen seitlichen linken Monobereich bildet, und
- die rechte seitliche Kamera einen seitlichen rechten Monobereich bildet, und
- die Bilddaten der Kameras in der Berechnungseinheit so zusammengeführt werden, dass die mindestens acht Sichtbereiche gebildet werden.

Vorzugsweise werden zumindest ein Teil der mindestens acht Sichtbereiche in einer Objekterkennungseinrichtung einer Objekterkennung zur Erkennung statischer und dynamischer Objekten unterzogen. Die Auswahl der Sichtbereiche, deren zusammengeführte Bilddaten einer Objekterkennung unterzogen werden, ist im Prinzip eine Funktion der installierten Rechenleistung, d.h. bei einer ausreichenden Rechenleistung können alle Sichtbereiche in Echtzeit untersucht werden.

Weiter bevorzugt ist die Auswahl der Sichtbereiche, in denen von der Objekterkennungseinrichtung eine Objekterkennung durchführt, eine Funktion der Geschwindigkeit, aus der die Fahrtrichtung folgt, und/oder des Lenkwinkels des Fahrzeugs. Mit anderen Worten, fährt das Fahrzeug vorwärts, so werden nur die frontseitigen und seitlichen vorderen Sichtbereiche einer Objektekennung unterzogen. Ist die Fahrtrichtung jedoch rückwärts, so werden die heckseitigen und die seitlichen hinteren Sichtbereiche einer Objekterkennung unterzogen, was zu einer Reduktion der benötigten Rechenkapazität führt. Bei höheren Geschwindigkeiten muss ggf. die Framerate zu verarbeitender Bilder erhöht werden, was den Rechenaufwand erhöht. Um dem Entgegenzuwirken können die Seitenkameras als Funktion nach Lenkwinkel an- und abgeschaltet werden.

Weiter bevorzugt wird in der Objekterkennungseinrichtung überprüft, ob erkannte statische oder dynamische Objekte sich im Fahrschlauch des Fahrzeugs befinden. Somit können diejenigen erkannten Objekte, die sich nicht im Fahrschlauch befinden, unberücksichtigt bleiben.

Weiter bevorzugt weist die Vorrichtung eine Ausgabeeinrichtung auf, die erkannte statische oder dynamische Objekte im Fahrschlauch zur Darstellung auf einem Display und/oder an ein Assistenzsystem ausgibt. Als Assistenzsystem kommt beispielsweise ein Parkassistenzsystem in Frage.

Vorzugsweise liegen die Winkel der frontseitigen und heckseitigen Kameras gegenüber der Fahrzeuglängsachse im Bereich von 10° bis 30°. Durch die Wahl unterschiedlicher Winkel können die Sichtbereiche asymmetrisch zur Fahrzeuglängsachse angeordnet werden.

Weiter bevorzugt sind die Winkel der frontseitigen und heckseitigen Kameras gegenüber der Fahrzeuglängsachse identisch. Gleiche Winkel führen zu symmetrisch um die Längsachse angeordneten Sichtbereichen, so dass die notwendigen Berechnungen vereinfacht werden.

Vorzugsweise beträgt der Winkel der frontseitigen und heckseitigen Kameras gegenüber der Fahrzeuglängsachse jeweils 15° nach außen. Dieser Winkel ermöglicht eine optimale Erkennung wesentlicher Teile des Fahrschlauchs in Stereo.

Die Erfindung sieht daher vor, dass hinreichend viele Weitwinkelkameras in ein Fahrzeug eingebaut werden, so dass das komplette Umfeld, zumindest aber der Fahrschlauch, abgesichert werden können. Dabei wird im Fahrschlauch ein Stereosystem verwendet, wobei die Einbaulagen optimal gewählt und die nutzbaren Winkelbereiche der Kameras berücksichtigt werden. Die Seitenkameras können einbaulagenbedingt gut zur Parklückendetektion und/oder Bordsteinerkennung genutzt werden, wofür ein monokulares System ausreichend ist. Es handelt sich bei der Erfindung um einen Mono-/Stereo Ansatz zur kompletten Erfassung des Umfelds, wobei insbesondere der gesamten Fahrschlauch in Vorwärts und Rückwärtsrichtung als Stereosystem erfasst wird.

Eine bevorzugte Ausführungsform der Erfindung wird nachfolgend anhand der Zeichnungen erläutert. Dabei zeigt
- Fig. 1: eine Darstellung der Kameraanordnung am Fahrzeug,
- Fig. 2: eine Darstellung der sich ergebenden Stereo- und Monobereiche,
- Fig. 3: Ermittlung eines dynamischen Objekts im Seitenbereich, und
- Fig. 4: die Vorrichtung zur Fahrschlauchabsicherung in schematischer Darstellung.

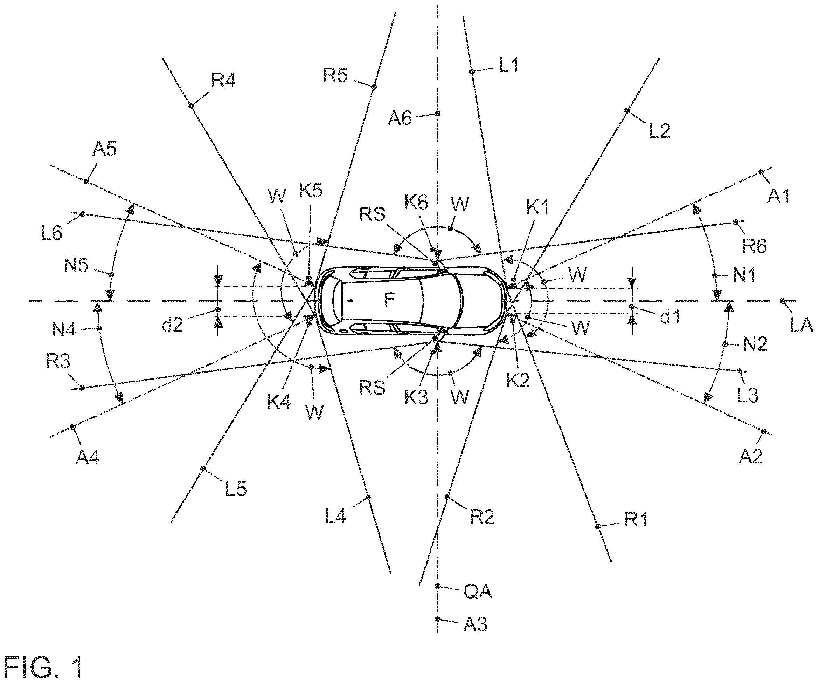

Fig. 1 zeigt die Anordnung der sechs Kameras K1 bis K6 an einem Kraftfahrzeug F, wobei es sich bei den verwendeten Kameras K1 bis K6 um Weitwinkelkameras mit einem effektiven Sicht- oder Öffnungswinkel W handelt. Dabei umfasst der effektive Öffnungswinkel W in diesem Beispiel einen Bereich von 160° bis 170°, und beträgt insbesondere 165° bis 167,5°. Unter dem effektiven Öffnungswinkel W einer Weitwinkelkamera wird derjenige Öffnungswinkel verstanden, der für die Berechnungen sinnvollerweise benutzt werden kann. Hat zum Beispiel eine Weitwinkelkamera einen tatsächlichen Öffnungswinkel von 190°, so wird üblicherweise nur ein Bereich von 165° für die Auswertung der Bilddaten verwendet, da die Verzerrungen des aufgenommenen Bildes in den äußersten Winkelbereichen so groß sind, dass eine Auswertung dieser Daten des Randbereichs keinen Sinn macht. In den Ausführungen hier wird unter dem Öffnungswinkel W einer Weitwinkelkamera daher immer der im Vorangegangenen erläuterte effektive Winkelbereich verstanden. Die genannten Winkelbereiche sollen nicht als einschränkend verstanden werden, sondern sind nur als Beispiel gedacht. Kommen Weitwinkelkameras mit einem größeren effektiven Winkelbereich zum Einsatz, so vergrößert sich die möglichen Stereobereiche entsprechend.

Im Beispiel der Fig. 1 sind die Öffnungswinkel W für alle verwendeten Kameras K1 bis K6 identisch, was aber nicht zwingend ist. Das fahrzeugeigene Koordinatensystem weist eine Längsachse LA und eine senkrecht dazu stehende Querachse QA auf, wobei die Querachse QA in der Fig. 1 auf der Höhe der Außenrückspiegels RS eingezeichnet ist.

Zur Überwachung des vorderen Fahrzeugumfelds sind zwei Weitwinkelkameras K1 und K2 mit dem oben genannten Öffnungswinkel W unter einem Abstand d1 an der Frontseite des Fahrzeugs F angeordnet, wobei die linksseitig angeordnete Kamera K1 eine Kameraachse A1 und die rechtseitig angeordnete Kamera K2 eine Kameraachse A2 aufweist. Der Abstand d1 bewegt sich üblicherweise in einem Bereich von 0,4 bis 1,5 m, insbesondere 0,6m bis 0,7 m, je nach Anordnung der Kameras, wobei die Anordnung von der Frontgestaltung des Fahrzeugs abhängt und maximal die Breite des Fahrzeugs möglich ist. Die beiden Kameras K1 und K2, d.h. ihre Kameraachsen A1 und A2, sind in Draufsicht jeweils um einen vorgegebenen Winkel N1 und N2 gegenüber der Fahrzeuglängsachse LA nach außen geneigt, wobei der horizontale Winkel N1 bzw. N2 in einem Bereich von 10° bis 25° liegt und insbesondere 15° beträgt.

Die vertikale Ausrichtung, d.h. der Nickwinkel der Kameras ist hier nicht so ausschlaggebend wie die diskutierten horizontalen Winkel und Winkelbreiten. In Serienfahrzeugen sind Umfeldkameras typischerweise etwas nach unten gekippt, damit kann mit Weitwinkelkameras der Nahbereich gut abgedeckt werden, die üblichen Nickwinkel der Kameras passen somit in das hier vorgestellte Konzept.

Üblicherweise sind die beiden Kameras K1 und K2 um denselben Winkel N1, N2 nach außen geneigt, d.h. N1 = N2, es ist jedoch auch möglich die beiden horizontalen Winkel N1, N2 unterschiedlich zu wählen. So kann fahrerseitig, d.h. linksseitig, für die Kamera K1 ein Winkel N1 von 15° eingestellt sein, während der Winkel N2 der rechtsseitigen Kamera K2 eine Wert von 25° aufweist, wodurch sich der aus den beiden Kameras K1 und K2 gebildete nutzbare Stereobereich asymmetrisch um die Längsachse LA ausbildet und in Richtung Fahrtrichtung nach rechts verschiebt.

Die Öffnungswinkel W der beiden Kameras K1 und K2 sind durch linke und rechte Öffnungswinkelbegrenzungen oder Ränder definiert. So wird der Öffnungswinkel W der Kamera K1 definiert durch den linken Rand L1 und durch den rechten Rand R1. Analog definieren die Ränder L2 und R2 den Öffnungswinkel der Kamera K2, die Ränder L3 und R3 den Öffnungswinkel W der Kamera K3, die Ränder L4 und R4 den Öffnungswinkel W der Kamera K4, die Ränder L5 und R5 den Öffnungswinkel W der Kamera K5 und die Ränder L6 und R6 den Öffnungswinkel W der Kamera K6. Dabei beziehen sich die Begriffe "links" und "rechts" der Ränder der Öffnungswinkel hier auf die jeweilige Kameraachse A1 bis A6 der Kameras K1 bis K6 und der Begriff "Öffnungswinkel" bezieht sich auf den effektiven Öffnungswinkel, d.h. Bildinformationen einer Kamera außerhalb des Öffnungswinkels werden nicht berücksichtigt.

Die rechte seitliche Kamera K3 ist in diesem Beispiel am Ort des Außenrückspiegels RS angeordnet, wobei einen andere seitliche Anordnung der Kamera ebenfalls möglich ist, beispielsweise in der Seitentür, und ihre Kameraachse A3 fällt mit der Querachse QA des Fahrzeugs F zusammen. Mit anderen Worten, die Kamera K3 ist senkrecht zur Fahrzeuglängsachse LA ausgerichtet und der Öffnungswinkel W wird durch die Ränder L3 und R3 definiert. Eine gleiche Notation gilt für die linke seitliche Kamera K6. Hier fällt ebenso die Kameraachse A6 mit der Querachse QA des Fahrzeugs F zusammen und der Öffnungswinkel W der linksseitigen Kamera K6 wird durch die Ränder L6 und R6 gebildet. Sind die beiden Frontkameras K1 und K2 daher beispielsweise unter einem Winkel von 15° zur Fahrzeuglängsachse LA angeordnet, so hat der Winkel zwischen den seitlichen Kameras K3 und K6 zur jeweils benachbarten Frontkamera K1 und K2 einen Wert von 75°. Mit anderen Worten, die linke seitliche Kamera K6 ist zur linken Frontkamera um 75° versetzt angeordnet und die rechte seitliche Kamera K3 schließt mit der rechten Frontkamera K2 ebenfalls einen Winkel von 75° ein.

Die beiden Kameras K4 und K5 sind mit einem Abstand d2 voneinander am Heck des Kraftfahrzeugs F angeordnet, wobei beide Heckkameras K4 und K5 unter einem jeweiligen Winkel N4 und N5 gegenüber der Fahrzeuglängsachse LA nach außen geneigt angeordnet sind. Auch hier liegen die horizontalen Winkel N4, N5 im Bereich zwischen 10° und 30°, wobei im vorliegenden Fall gleiche Winkel für beide Kameras K4, K5 gewählt sind, nämlich 15° nach außen gegenüber der Fahrzeuglängsache LA. Folglich hat der Winkel zwischen der linken Heckkamera K5 und der linken seitlichen Kamera K6 einen Wert von 75°, was auch für die Kombination rechte Heckkamera K4 und rechte seitliche Kamera K3 zutrifft. Der Abstand d2 zwischen den beiden Heckkameras K4, K5 liegt ebenfalls im Bereich zwischen 0,4 m und 1,5 m, insbesondere 0,6 m bis 0,7 m, wobei d2 maximal die Fahrzeugbreite einnehmen kann.

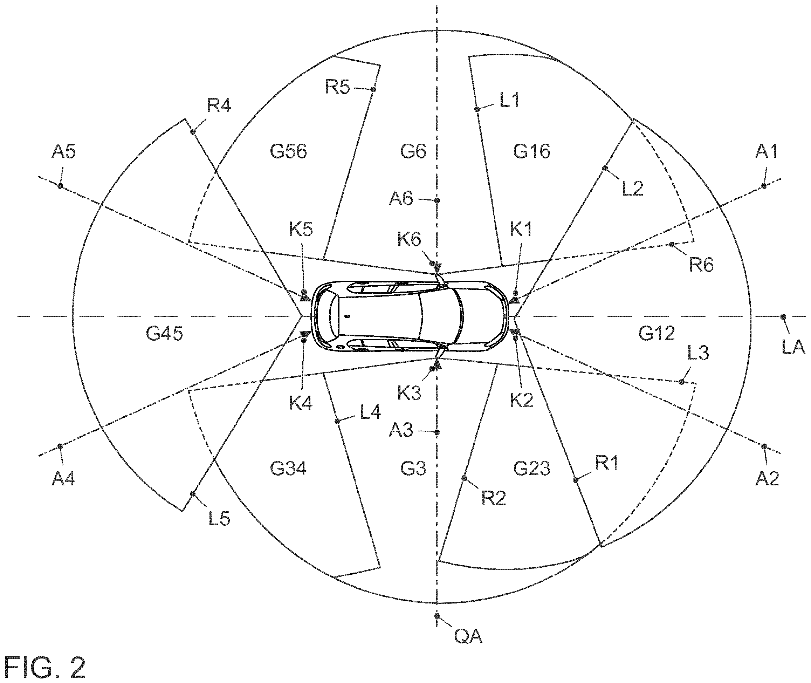

Aus Gründen der besseren Darstellbarkeit sind in den Figuren 1 und 2 die Winkel N1, N2, N4 und N5 der Front- und Heckkameras K1, K2, K4 und K5 gegenüber der Fahrzuglängsachse mit 25° gewählt. In der Realität, d.h. der tatsächlichen Ausführungsform, wird ein Winkel von 15° bevorzugt.

Fig. 2 zeigt in schematischer Darstellung die Abdeckung des Umfelds des Fahrzeugs F durch die sechs Kameras K1 bis K6, wobei verschiedene Bereiche durch das Zusammenspiel der Kameras entstehen. Die Überlagerung der Öffnungswinkel W der Frontkameras K1 und K2 ergibt ein vorderes Sichtgebiet G12, welches durch die Ränder L2 der linken Kamera und R1 der rechten Kamera begrenzt ist. In diesem Gebiet G12 ist aufgrund des Zusammenwirkens der beiden Kameras K1 und K2 eine Stereoerkennung von Hindernissen und Objekten gegeben.

Die auf der rechten Seite des Kraftfahrzugs F angeordnete seitliche Kamera K3 bildet mit der unter einem Winkel N2 angeordneten rechten vorderen Kamera K2 einen seitlichen Stereobereich G23, der durch die Ränder L3 und R2 gebildet wird und sich teilweise mit dem vorderen Stereobereich G12 überschneidet.

Gleiches gilt für die linke seitliche Kamera K6, die mit der unter einem Winkel N1 angeordneten linken Frontkamera K1 einen linken seitlichen Stereobereich G16 bildet, der die Ränder R6 und L1 aufweist und sich teilweise mit dem vorderen linken Stereobereich G12 überschneidet.

Die beiden seitlichen Kameras K3 und K6 erzeugen in seitlicher Richtung einen jeweiligen Monosichtbereich G3 und G6, wobei der rechte seitliche Monosichtbereich G3 durch die Ränder R2 und L4 gebildet wird und der linke seitliche Monobereich G6 durch die Ränder R5 und L1 gebildet wird.

Durch die drei vorderen Stereobereiche G12, G23 und G16 sowie die drei hinteren Stereobereiche G34, G45 und G56 wird eine fast vollständige Stereoüberwachung des Fahrschlauchs eines Kraftfahrzeugs mit einer Reichweite von bis zu 10m, vorzugsweise 6,5 m erreicht, so dass die ausreichende Fahrschlauchüberwachung beispielsweise bei einem Parkvorgang, bereitgestellt wird. Durch die beiden seitlichen Monobereiche G3 und G6 kann eine Bordsteinerkennung, Parkmarkierungserkennung oder eine Parklückenvermessung erfolgen.

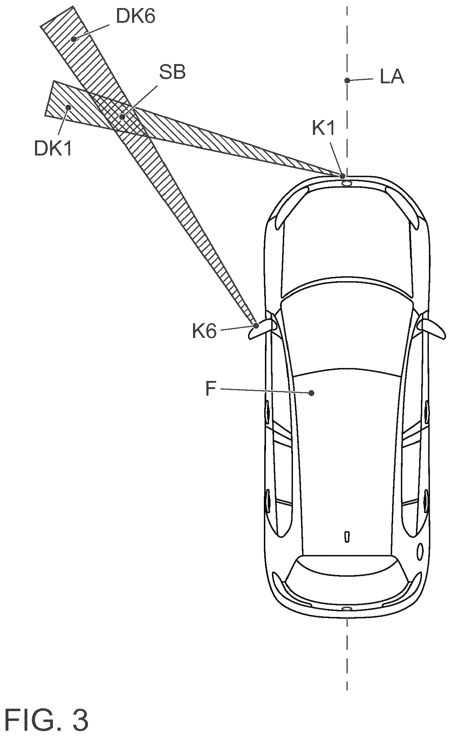

Fig. 3 zeigt beispielhaft die Detektion bewegter Objekte im seitlichen vorderen Umfeld des Fahrzeugs F. Wird ein sich bewegendes Objekt, beispielsweise ein Fußgänger, von den beiden Kameras K1 und K6 im Schnittbereich SB der beiden Detektionskeulen DK1 und DK6 detektiert, so kann durch eine Triangulation eine aktuelle Entfernungsschätzung des Objekts errechnet werden. In gleicher Weise gilt dies natürlich für sämtliche durch die Kombination der Kameras K1 bis K6 erzeugten Stereobereiche.

Durch die oben beschriebenen Maßnahmen kann der gesamte Fahrschlauch des Fahrzeugs über ein Stereosystem erfasst werden und erlaubt eine schnelle Verfügbarkeit und verbesserte Genauigkeit. Die hier gewählten Abdeckungen erlauben zudem einen bessere Bordsteinerkennung in den kritischen Bereichen G3 und G6 für den Felgenschutz. Bei hinreichenden Rechenressourcen kann daher das gesamte Umfeld erfasst werden, wobei für die Fahrzeugseiten ein monokulares System ausreicht. Mit modernen Prozessoren ist es möglich, dass je vier Kameras, also K1, K2, K3 und K6 für die Vorwärtsfahrt und K3, K4, K5 und K6 für die Rückwärtsfahrt, derzeit in Echtzeit gerechnet werden können. Das Sensor- und Hardwaresetting nähert sich damit den Anforderungen der Kundenfunktionen im Niedriggeschwindigkeitsbereich, beispielsweise beim Einparken. Bei Verdreckung einer Kamera ist man weiterhin nicht komplett blind, sondern es kann als Monosystem weitergearbeitet werden.

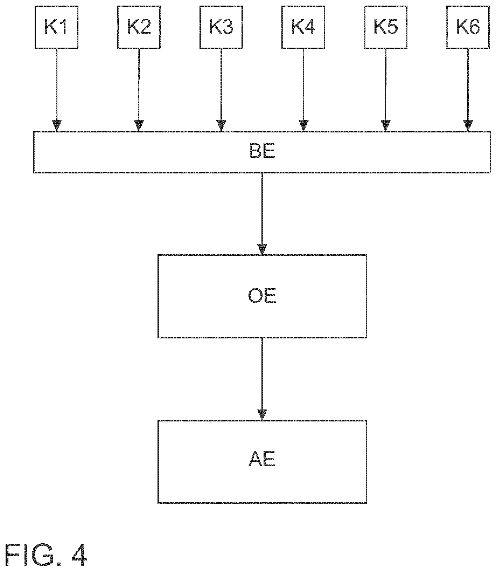

Fig. 4 zeigt in vereinfachter schematischer Darstellung eine Vorrichtung zur Überwachung des Fahrschlauchs eines Fahrzeugs F mit sechs Kameras K1 bis K6 mit der in den Figuren 1 und 2 beschriebenen Anordnung am Fahrzeug F, d.h. zwei Frontkameras K1 und K2, zwei Heckkameras K4 und K5 und jeweils eine Seitenkamera K3 und K6 an jeder Seite des Fahrzeugs.

Die Signale der Kameras K1 bis K6 werden einer Berechnungseinrichtung BE zugeführt, der noch weitere Fahrzeugsignale zugeführt werden können (nicht dargestellt), wie die aktuelle Fahrtrichtung, Fahrgeschwindigkeit und Lenkwinkel. In der Berechnungseinrichtung BE werden die Signale der Kameras K1 bis K6 so zusammengeführt, dass die unterschiedlichen Sichtbereiche G12 bis G16 datenmäßig vorliegen. Dabei können beispielsweise aufgrund einer beschränkten Rechenkapazität bei einer Vorwärtsfahrt nur die Bereiche berücksichtigt werden, die von der beiden Frontkameras K1 und K2 sowie den beiden seitlichen Kameras K3 und K6 gebildet werden, d.h. die Sichtbereiche G12, G23, G3, G6 und G16. Bei einer Rückwärtsfahrt werden in analoger Weise nur die Sichtbereiche G3, G34, G45, G56 und G6 der beiden Heckkameras K4 und K5 sowie der beiden Seitenkameras K3 und K6 gebildet. Aufgrund des Lenkwinkels ist es noch möglich für die Berechnung den seitlichen Stereobereich unberücksichtigt zu lassen, der für den sich aus dem Lenkwinkel ergebenden Fahrschlauch nicht relevant ist.

In der nachfolgenden Einrichtung OE zur Ermittlung von statischen und beweglichen Objekten werden in den aus den Kamerasignalen gebildeten Sichtbereichen statische und bewegliche Objekte ermittelt, wobei die Ermittlung auf vorgegebene Sichtbereiche begrenzt sein kann, beispielsweise bei einer Vorwärtsfahrt nur auf die Bereiche, die von den Frontkameras K1 und K2 sowie den Seitenkameras K3 und K6 gebildet werden können. Ferner können in der Objektermittlungseinrichtung OE mittels beispielsweise Triangulation Abstände bestimmt und ein Nachverfolgen ermittelter Objekte durch entsprechende Speicherung der Objektpositionen vorangegangener Messungen durchgeführt werden.

Die Ergebnisse der Objektermittlungseinrichtung OE werden über eine Ausgabeeinrichtung einem Assistenzsystem, beispielsweise einem Parkassistenten zugeführt und/oder auf einem Display dargestellt. Dabei können die Berechnungseinrichtung BE, Objektermittlungseinrichtung OE und Ausgabeeinrichtung AE Bestandteil eines zentralen Fahrerassistenzsteuergeräts sein.

### Bezugszeichenliste

- F: Fahrzeug
- LA: Fahrzeuglängsachse
- QA: Fahrzeugquerachse
- K1: Kamera links vorne
- K2: Kamera rechts vorne
- K3: Kamera seitlich rechts
- K4: Kamera rechts hinten
- K5: Kamera links hinten
- K6: Kamera seitlich links
- RS: Außenrückspiegel
- d1: Abstand zwischen Kamera 1 und Kamera 2
- d2: Abstand zwischen Kamera 4 und Kamera 5
- A1: Achse Kamera 1
- A2: Achse Kamera 2
- A3: Achse Kamera 3
- A4: Achse Kamera 4
- A5: Achse Kamera 5
- A6: Achse Kamera 6
- N1: Winkel der Kamera 1 gegenüber Fahrzeuglängsachse
- N2: Winkel der Kamera 2 gegenüber Fahrzeuglängsachse
- N4: Winkel der Kamera 4 gegenüber Fahrzeuglängsachse
- N5: Winkel der Kamera 5 gegenüber Fahrzeuglängsachse
- W: Öffnungswinkel der Kameras
- L1: Öffnungswinkelbegrenzung Links Kamera 1
- R1: Öffnungswinkelbegrenzung Rechts Kamera 1
- L2: Öffnungswinkelbegrenzung Links Kamera 2
- R2: Öffnungswinkelbegrenzung Rechts Kamera 2
- L3: Öffnungswinkelbegrenzung Links Kamera 3
- R3: Öffnungswinkelbegrenzung Rechts Kamera 3
- L4: Öffnungswinkelbegrenzung Links Kamera 4
- R4: Öffnungswinkelbegrenzung Rechts Kamera 4
- L5: Öffnungswinkelbegrenzung Links Kamera 5
- R5: Öffnungswinkelbegrenzung Rechts Kamera 5
- L6: Öffnungswinkelbegrenzung Links Kamera 6
- R6: Öffnungswinkelbegrenzung Rechts Kamera 6

- G12: Stereobereich der Kameras K1 und K2
- G23: Stereobereich der Kameras K2 und K3
- G3: Monobereich der Kamera 3
- G34: Stereobereich der Kameras K3 und K4
- G45: Stereobereich der Kameras K4 und K5
- G56: Stereobereich der Kameras K5 und K6
- G6: Monobereich der Kamera K5
- G16: Stereobereich der Kameras K1 und K6

- DK1: Detektionskeule Kamera K1
- DK6: Detektionskeule Kamera K6
- SB: Schnittbereich
- BE: Berechnungseinrichtung
- OE: Objektermittlungseinrichtung
- AE: Ausgabeeinrichtung

## Patentansprüche

1. Vorrichtung zur Überwachung des Fahrschlauchs eines Fahrzeugs (F) mit mindestens sechs am Fahrzeug zur Umfeldüberwachung angeordneten Kameras (K1 bis K6) und einer Berechnungseinrichtung (BE), wobei die Kameras (K1 bis K6) durch Weitwinkelkameras mit einem effektiven Sichtbereich (W) von mindestens 165° gebildet werden,
**dadurch gekennzeichnet, dass**
zwei Kameras (K1, K2) an der Frontseite des Fahrzeugs unter einem vorgegebenen Abstand (d1) so angeordnet sind, dass die Kameraachse (A1, A2) der jeweiligen Kamera (K1, K2) unter einem jeweiligen vorgegebenen Winkel (N1, N2) gegenüber der Fahrzeuglängsachse nach außen geneigt sind,
zwei Kameras (K4, K5) an der Heckseite des Fahrzeugs unter einem vorgegebenen Abstand (d2) so angeordnet sind, dass die Kameraachse (A4, A5) der jeweiligen Kamera (K4, K5) unter einem jeweiligen vorgegebenen Winkel (N4, N5) gegenüber der Fahrzeuglängsachse (LA) nach außen geneigt sind,
je eine Kamera (K3, K6) an jeder Seite des Fahrzeugs (F) so angeordnet ist, dass die Kameraachse (A3, A6) der jeweiligen Kamera (K3, K6) parallel zur Fahrzeugquerachse (QA) angeordnet ist,
die beiden frontseitigen Kameras (K1, K2) einen frontseitigen Stereosichtbereich (G12) bilden,
die beiden heckseitigen Kameras (K4, K5) einen heckseitigen Stereosichtbereich (G45) bilden
die linke seitliche Kamera (K6) mit der frontseitigen linken Kamera (K1) einen linksseitigen vorderen Stereobereich (G16) sowie die rechte seitliche Kamera (K3) mit der frontseitigen rechten Kamera (K2) einen rechtsseitigen vorderen Stereobereich (G23) bilden,
die linke seitliche Kamera (K6) mit der heckseitigen linken Kamera (K5) einen linksseitigen hinteren Stereobereich (G56) sowie die rechte seitliche Kamera (K3) mit der heckseitigen rechten Kamera (K4) einen rechtsseitigen hinteren Stereobereich (G34) bilden,
die linke seitliche Kamera (K6) einen seitlichen linken Monobereich (G6) bildet, und die rechte seitliche Kamera (K3) einen seitlichen rechten Monobereich (G3) bildet, und die Bilddaten der Kameras (K1 bis K6) in der Berechnungseinheit (BE) so zusammengeführt werden, dass die mindestens acht Sichtbereiche (G12, G23, G3, G34, G45, G56, G6, G16) gebildet werden.

2. Vorrichtung nach Anspruch 1, **dadurch gekennzeichnet, dass** zumindest ein Teil der mindestens acht Sichtbereiche in einer Objekterkennungseinrichtung (OE) einer Objekterkennung zur Erkennung statischer und dynamischer Objekten unterzogen werden.

3. Vorrichtung nach Anspruch 2, **dadurch gekennzeichnet, dass** die Sichtbereiche (G12, G23, G3, G34, G45, G56, G6, G16) in denen von der Objekterkennungseinrichtung (OE) eine Objekterkennung durchgeführt wird, eine Funktion der Geschwindigkeit und/oder des Lenkwinkel des Fahrzeugs (F) ist.

4. Vorrichtung nach einem der vorangegangenen Ansprüche, **dadurch gekennzeichnet, dass** in der Objekterkennungseinrichtung (OE) überprüft wird, ob erkannte statische oder dynamische Objekte sich im Fahrschlauch des Fahrzeugs (F) befinden.

5. Vorrichtung nach Anspruch 4, **dadurch gekennzeichnet, dass** die Vorrichtung eine Ausgabeeinrichtung (AE) aufweist, die erkannte statische oder dynamische Objekte im Fahrschlauch an ein Display und/oder ein Assistenzsystem ausgibt.

6. Vorrichtung nach einem der vorangegangenen Ansprüche, **dadurch gekennzeichnet, dass** die Winkel (N1, N2, N3, N4) der frontseitigen und heckseitigen Kameras (K1, K2, K4, K5) gegenüber der Fahrzeuglängsachse (LA) im Bereich von 10° bis 30° liegen.

7. Vorrichtung nach Anspruch 6, **dadurch gekennzeichnet, dass** die Winkel (N1, N2, N3, N4) der frontseitigen und heckseitigen Kameras (K1, K2, K4, K5) gegenüber der Fahrzeuglängsachse (LA) identisch sind.

8. Vorrichtung nach Anspruch 7, **dadurch gekennzeichnet, dass** der Winkel (N1, N2, N4, N5) der frontseitigen und heckseitigen Kameras (K1, K2, K4, K5) gegenüber der Fahrzeuglängsachse (LA) jeweils 15° nach außen beträgt.

## Claims

1. An apparatus for monitoring the driving path of a vehicle (F) with at least six cameras (K1 to K6) arranged on the vehicle for monitoring the surrounding area and a calculating means (BE), wherein the cameras (K1 to K6) are formed by wide angle cameras with an effective viewing area (W) of at least 165°,
**characterized in that**
two cameras (K1, K2) are arranged on the front side of the vehicle at a predetermined distance (d1), so that the camera axes (A1, A2) of the respective camera (K1, K2) are inclined outwardly at a respectively predetermined angle (N1, N2) relative to the vehicle longitudinal axis,
two cameras (K4, K5) are arranged on the rear side of the vehicle at a predetermine distance(d2), so that the camera axes (A4, A5) of the respective camera (K4, K5) are inclined outwardly at a respectively predetermined angle (N4, N5) relative to the vehicle longitudinal axis (LA),
one camera (K3, K6) is arranged on each side of the vehicle (F), so that the camera axis (A3, A6) of the respective camera (K3, K6) is arranged parallel to the vehicle transverse axis (QA),
the two frontal cameras (K1, K2) form a frontal stereo viewing area (G12),
the two rear cameras (K4, K5) form a rear stereo viewing area (G45),
the left side camera (K6) with the frontal left camera (K1) forms a left front stereo area (G16) and the right side camera with the frontal right camera forms a right front stereo area (G23),
the left side camera (K6) with the rear left camera (K5) forms a left rear stereo area (G56) and the right side camera (K3) with the rear right camera (K4) forms a right rear stereo area (G34),
the left side camera (K6) forms a side left mono area (G6), and the right side camera (K3) forms a side right mono area (G3), and the image data of the cameras (K1 to K6) are combined in the calculation unit (BE) so that the at least eight viewing areas (G12, G23, G3, G34, G45, G56, G6, G16) are formed.

2. An apparatus according to Claim 1, **characterized in that** at least some of the at least eight viewing areas are subjected in an object detection device (OE) to an object detection for detecting static and dynamic objects.

3. An apparatus according to Claim 2, **characterized in that** the viewing areas (G12, G23, G3, G34, G45, G56, G6, G16), in which an objection detection is carried out by the object detection device (OE), is a function of the speed and/or of the steering angle of the vehicle (F).

4. An apparatus according to any one of the preceding claims, **characterized in that** in the object detection device (OE) it is checked, whether detected static or dynamic objects are located in the driving path of the vehicle (F).

5. An apparatus according to Claim 4, **characterized in that** the apparatus has an output device (AE) which outputs detected static or dynamic objects in the driving path to a display and/or an assistance system.

6. An apparatus according to any one of the preceding claims, **characterized in that** the angles (N1, N2, N3, N4) of the front and rear cameras (K1, K2, K4, K5) are in the range of 10° to 30° relative to the vehicle longitudinal axis (LA).

7. An apparatus according to Claim 6, **characterized in that** the angles (N1, N2, N3, N4) of the front and rear cameras (K1, K2, K4, K5) relative to the vehicle longitudinal angle (LA) are identical.

8. An apparatus according to Claim 7, **characterized in that** the angle (N1, N2, N4, N5) of the front and rear cameras (K1, K2, K4, K5) relative to the vehicle longitudinal axis (LA) in each case is 15° outwards.

## Revendications

1. Dispositif de surveillance d'une trajectoire de véhicule (F) avec au moins six caméras (K1 à K6) disposées sur le véhicule pour la surveillance de l'environnement et un dispositif de calcul (BE), les caméras (K1 à K6) étant constituées de caméras grand angle avec un champ de vision effectif (W) d'au moins 165°,
**caractérisé en ce que**
deux caméras (K1, K2) sont disposées sur le côté frontal du véhicule à une distance prédéterminée (d1), de façon à ce que l'axe de caméra (A1, A2) de la caméra (K1, K2) correspondante soit incliné vers l'extérieur avec un angle prédéterminé (N1, N2) correspondant par rapport à l'axe longitudinal du véhicule,
deux caméras (K4, K5) sont disposées sur le côté arrière du véhicule à une distance prédéterminée (d2), de façon à ce que l'axe de caméra (A4, A5) de la caméra (K4, K5) correspondante soit incliné vers l'extérieur avec un angle prédéterminé (N4, N5) correspondant par rapport à l'axe longitudinal du véhicule (LA),
une caméra (K3, K6) est disposée de chaque côté du véhicule (F) de façon à ce que l'axe de caméra (A3, A6) de la caméra (K3, K6) correspondant soit disposé parallèlement à l'axe transversal du véhicule (QA),
les deux caméras frontales (K1, K2) constituent un champ de vision stéréoscopique frontal (G12),
les deux caméras arrière (K4, K5) constituent un champ de vision stéréoscopique arrière (G45),
la caméra latérale gauche (K6) constitue, avec la caméra frontale gauche (K1), un champ stéréoscopique avant gauche (G16) et la caméra latérale droite (K3) constitue, avec la caméra frontale droite (K2), un champ stéréoscopique avant droit (G23),
la caméra latérale gauche (K6) constitue, avec la caméra arrière gauche (K5), un champ stéréoscopique arrière gauche (G56) et la caméra latérale droite (K3) constitue, avec la caméra arrière droite (K4), un champ stéréoscopique arrière droit (G34),
la caméra latérale gauche (K6) constitue un champ monoscopique latéral gauche (G6) et la caméra latérale droite (K3) constitue un champ monoscopique latéral droit (G3) et
les données d'images des caméras (K1 à K6) dans l'unité de calcul (BE) sont fusionnées de façon à ce que les au moins huit champs de vision (G12, G23, G3, G34, G45, G56, G6, G16) soient formés.

2. Dispositif selon la revendication 1, **caractérisé en ce qu'**au moins une partie des au moins huit champs de vision sont soumis, dans un dispositif de reconnaissance d'objets (OE), à une reconnaissance d'objets pour la reconnaissance d'objets statiques et dynamiques.

3. Dispositif selon la revendication 2, **caractérisé en ce que** les champs de vision (G12, G23, G3, G34, G56, G6, G16) dans lesquels une reconnaissance d'objets est effectuée par le dispositif de reconnaissance d'objets (OE), dépendent de la vitesse et/ou de l'angle de direction du véhicule (F).

4. Dispositif selon l'une des revendications précédentes, **caractérisé en ce que**, dans le dispositif de reconnaissance d'objets (OE), il est vérifié si des objets statiques ou dynamiques détectés se trouvent sur la trajectoire du véhicule (F).

5. Dispositif selon la revendication 4, **caractérisé en ce que** le dispositif comprend un dispositif de sortie (AE) qui sort les objets statiques ou dynamiques détectés sur la trajectoire sur un affichage et/ou un système d'assistance.

6. Dispositif selon l'une des revendications précédentes, **caractérisé en ce que** les angles (N1, N2, N3, N4) des caméras frontales et arrière (K1, K2, K4, K5) se trouvent dans un intervalle de 10° à 30° par rapport à l'axe longitudinal du véhicule (LA).

7. Dispositif selon la revendication 6, **caractérisé en ce que** les angles (N1, N2, N3, N4) des caméras frontales et arrière (K1, K2, K4, K5) par rapport à l'axe longitudinal du véhicule (LA) sont identiques.

8. Dispositif selon la revendication 7, **caractérisé en ce que** l'angle (N1, N2, N4, N5) des caméras frontales et arrière (K1, K2, K4, K5) vers l'extérieur par rapport à l'axe longitudinal du véhicule (LA) est égal à 15°.
